# EUROPEAN PATENT SPECIFICATION

(11) **EP 0 806 874 B1**
(45) Date of publication and mention of the grant of the patent: **11.12.2002**
(21) Application number: 97107626.0
(22) Date of filing: 09.05.1997
(51) Int. Cl.: H04N 7/52, H04N 7/64

(54) **Timing error recovery in isochronous packetized data transmission**
Zeitfehlerbeseitigung bei isochroner Paketdatenübertragung
Redressement d'erreurs de temps dans la transmission de données isochrone à paquets

(30) Priority: 10.05.1996 US 17467; 11.07.1996 US 678108
(43) Date of publication of application: 12.11.1997
(60) Divisional application: 02004998.7
(73) Proprietor: General Instrument Corporation, Horsham, Pennsylvania 19044 (US)
(72) Inventor: Nuber, Ray, La Jolla, California 92037 (US); Moroney, Paul, Olivenhain, California 92024 (US)
(74) Representative: Hoeger, Stellrecht & Partner

(56) References cited:
- EP-A- 0 668 700
- EP-A- 0 673 154
- EP-A- 0 679 028
- EP-A- 0 730 384
- WO-A-93/09636
- WO-A-96/07274
- FR-A- 2 648 972
- US-A- 4 852 127
- US-A- 5 287 351
- US-A- 5 365 272
- US-A- 5 371 547
- US-A- 5 450 425
- VOETEN B ET AL: "INTEGRATING VIDEO CODECS IN ATM NETWORKS" PROCEEDINGS OF THE INTERNATIONAL SWITCHING SYMPOSIUM. (ISS),US,NEW YORK, IEEE, vol. SYMP. 13, 1990, pages 25-28, XP000130957

## Description

The present invention relates to a method and apparatus for communicating data via a packetized data stream, and more particularly to the detection of and recovery from errors in high rate isochronous data ("isodata") in a digital data stream. Such a data streams can comprise, for example, an MPEG-2 or DigiCipher® II data stream.

EP 0 668 700 discloses a method and device for synchronizing an audio output and a video output when decoding an MPEG data stream. The MPEG stream is separated Into audio and video streams. A system clock reference (SCR), a presentation time stamp (PTS) for the audio and a PTS for the video are extracted from the MPEG stream. The audio stream, the SCR, and the audio PTS are sent to an audio decoder for decoding. The video stream, the SCR, and the video PTS are sent to a video decoder for decoding. A video controller responsive to the video PTS and the SCR controls the output timing of the video data. An audio controller responsive to the audio PTS and the SCR controls the output timing of the audio data.

Proc. IEEE Intl. Switching Symposium (ISS), New York, vol. Symp. 13, 1990, pp. 25-28, Voeten B. et al. addresses the problem of cell loss which is solved by providing dummy cells in order to replace the lost cells.

Various standards have emerged for the transport of digital data, such as digital television data. Examples of such standards include the Motion Picture Experts Group standard referred to as MPEG-2 and the DigiCipher II standard proprietary to General Intrument Corporation of Chicago, Illinois, USA, the assignee of the present invention. The DigiCipher II standard is similar and inclusive of various aspects of the MPEG-2 standard, which is widely known and recognized as a video and audio compression specification sanctioned by the International Standards Organization (ISO) in Document ISO 13818. In addition to the video and audio compression features, the MPEG-2 specification also contains a systems "layer" that provides a transmission medium independent coding technique to build bitstreams containing one or more MPEG programs. The MPEG coding technique uses a formal grammar ("syntax") and a set of semantic rules for the construction of bitstreams to be transmitted. The syntax and semantic rules include provisions for multiplexing, clock recovery, synchronization and error resiliency. For purposes of this disclosure, any data stream that is coded similarly to that of an MPEG-2 transport 'stream is referred to as an "MPEG-2 type transport stream." One example, but by no means the only such MPEG-2 type transport stream, is a data stream provided in accordance with the DigiCipher II standard. Other such standards are expected to be promulgated in the future.

The MPEG-2 transport stream is designed with consideration for transmission in conditions that can generate data errors. MPEG transport packets each have a fixed length of 188 bytes. Many programs, each with different components, may be combined in a transport stream. Examples of services that can be provided using the MPEG format are television services broadcast over terrestrial, cable television and satellite networks as well as interactive telephony-based services. The syntax and semantics of the MPEG-2 transport stream are defined in the International Organisation for Standardisation, ISO/IEC 13818-1, International Standard, 13 November 1994 entitled *Generic Coding of Moving Pictures and Associated Audio: Systems,* recommendation H.222.0, and ISO/IEC 13818-2, International Standard, 1995 entitled *Generic Coding of Moving Pictures and Associated Audio: Video,* recommendation H.262, both incorporated herein by reference.

Multiplexing according to the MPEG-2 standard is accomplished by packaging raw elementary streams such as coded video and audio into packetized elementary stream (PES) packets which are then inserted into transport packets. As noted above, each MPEG transport packet is fixed at 188 bytes in length. The first byte is a synchronization byte having a unique eight-bit pattern, e.g., 01000111. The sync byte indicates the beginning of each transport packet.

Following the sync byte is a three-byte prefix which includes a one-bit transport packet error indicator, a one-bit payload unit start indicator, a one-bit transport priority indicator, a 13-bit packet identifier (PID), a two-bit transport scrambling control, a two-bit adaptation field control, and a four-bit continuity counter. Use of the sync byte and three-byte prefix leaves up to 184 bytes of payload which carry the data to be communicated. An optional adaptation field may follow the prefix for carrying both MPEG related and private information of relevance to a given transport stream or the elementary stream carried within a given transport'packet. Provisions for clock recovery, such as a program clock reference (PCR) and splicing control are typical of the information carried in the adaptation field. By placing such information in an adaptation field, it becomes encapsulated with its associated data to facilitate remultiplexing and network routing operations. When an adaptation field is used, the payload is correspondingly shorter.

The PCR is a count which reflects the value of the system time clock (STC) for the associated program at the time the PCR value was inserted into the transport stream. The decoder uses the PCR to synchronize a decoder time clock with the encoder system clock. The lower nine bits of the 42-bit PCR provide a modulo-300 counter that is incremented at a 27 MHz clock rate (the "system clock rate"). At each modulo-300 rollover, the count in the upper 33 bits is incremented, such that the upper bits represent counts that occur at a 90 kHz rate. This enables presentation time-stamps' (PTS) and decoding time-stamps (DTS) to be compared using the 90 kHz value. Since each program or service carried by the data stream may have its own PCR, the programs and services can be multiplexed asynchronously.

Synchronization of audio, video and data within a program is accomplished using a time stamp approach. Presentation time-stamps and decoding time-stamps are inserted into the transport stream for the separate video and audio packets. The PTS and DTS information is used by the decoder to determine when to decode and display a picture and when to play an audio segment. As indicated above, the PTS and DTS values are tied to the same clock established by the PCRs, but are limited by the MPEG-2 standard to a time resolution of 11.1 microseconds. This resolution is limited by the PTS resolution of 90 kHz ticks, provided by the upper 33 bits of the PCR. This limitation precludes the transport of generalized "high rate" data which is robust to timing errors, e.g., data rates not integer related to 90 kbps, using the same approach provided for video and audio information in a standard MPEG-2 type transport stream.

MPEG-2 data, such as compressed video and audio data, must be formatted into a packetized elementary stream (PES) formed from a succession of PES packets. Each PES packet includes a PES header followed by a payload. The PES packets are then divided into the payloads of successive fixed length transport packets.

PES packets are generally of variable and relatively long length. Various optional fields, such as the presentation time-stamps and decoding time-stamps may follow the PES header. When the transport packets are formed from the PES, the PES headers are aligned with the transport packet headers. A single PES packet may span many transport packets and the subsections of the PES packet must appear in consecutive transport packets of the same PID value. It should be appreciated, however, that these transport packets may be freely interleaved with other transport packets having different PIDs and carrying data from different elementary streams.

Video services are carried by placing coded MPEG video streams into PES packets which are then divided into transport packets for insertion into a transport stream. Each video PES packet contains all or part of a coded video picture, referred to as a "video presentation unit." PTS and DTS data are placed into the PES packet header that encapsulates the associated presentation unit. The DTS indicates when the decoder should decode the presentation unit. The PTS is used to actuate the decoder to present (e.g., "display") the associated presentation unit.

Audio services are provided in accordance with the MPEG standard using the same specification of the PES packet layer. PTS data is attached to some packets that include audio frame boundaries. Such boundaries are defined by audio synchronization (sync) words. An audio frame is defined as the data between two consecutive audio sync words.

In order to reconstruct a television signal from the video and audio information carried in an MPEG-2 type (e.g., MPEG-2 or DigiCipher II) transport stream, a decoder is required to process the video packets for output to a video decompression processor (VDP) and the audio packets for output to an audio decompression processor (ADP). It is also possible to transmit other types of data in such a transport stream. For example, private data to provide services such as teletext, stock quotes and other information can be carried as separate transport packets derived from a separate packetized elementary stream. Asynchronous data pipes can be supported as well; such a pipe would represent an RS-232 style output from the decoder with the equivalent input to an encoder. Such information service transport packets would be multiplexed with the MPEG video and audio packets in a final multiplex transmitted, e.g., via satellite or cable.

In addition to asynchronous data "isochronous" data is known.

Isochronous data is high rate data provided at the edges of a regular clock and is distinguished from bursty "synchronous" data which may arrive with an irregular clock. Thus, isochronous data carries a jitter specification and the clock can be restored with a simple phase lock loop (PLL). In general, an isochronous data component is one in which data bits are presented at essentially regular rates, with an accompanying clock. Any deviation from the regular (isochronous) rate would be defined by the jitter specification. Such data may be used for any number of a large range of "data pipe" applications. One example is the transport of the contents of a T1 digital (i.e., telephone data line) data stream. Such data streams operate at 1.554-Mbps. Other applications include, but are not limited to, business network data, general high speed data communications, and virtually any other data service requiring constant delay data transmission rates that exceed those generally available using asynchronous communication techniques or are not appropriate for variable delay. These applications are characterized by a general intolerance of "bit slips". That is, errors are tolerated, but resynchronization involving net shifts of the bitstream cause large outages to the ultimate data synchronization.

It is the object of the Invention to find a way to carry isochronous data using an MPEG-2 type format.

This object is solved by a method for managing timing errors in isochronous data according to claim 1, with further advantageous embodiments according to claims 2 to 5.

This object is further solved by a decoder according to claim 6 and further advantageous embodiments according to claims 7 to 10.

The advantage of the inventive concept enabling carriage of isochronous data using an MPEG-2 type format is the following:

In the MPEG-2 standard, the presentation time-stamps are only able to indicate presentation unit instances (i.e. 8-bit bytes of data "presented" to the decoder) with a resolution of 11.1 microseconds. This limitation results from the 90kHz rate established by the upper bits of the PCR count used to produce the presentation time-stamps. With high speed isochronous data, it is necessary to resolve presentation unit times with a higher resolution, especially for purposes of error recovery. Specifically, it is necessary to be capable of presenting presentation units unambiguously in time to support continuously variable rates.

Therefore, advantage of the inventive concept is to increase the time resolution of the presentation time-stamps over that provided by a standard MPEG-2 implementation.

For example, it is advantageous to provide a scheme for increasing the PTS time resolution to allow the robust transport of isochronous data or the like at rates up to 9.0 Mbps or more.

It is further an advantage of one embodiment of the invention to provide a scheme for simplifying a data receiver to provide the appropriate clock rates based on a system clock frequency, in order to recover data from a data stream.

In particular, it is advantageous to provide a scheme in which the receiver would be able to provide a clock at any desired information data rate from, e.g., 19.2 kbps to 9 Mbps for use in outputting isochronous information data, via direct digital synthesis (DDS).

It is still further an advantage of an embodiment of the invention to provide a method and apparatus for managing the inevitable errors that occur in the transmission of isochronous data via a packetized transport stream.

In particular, it is desirable to maintain synchronization of incoming isodata despite the occurence of errors and during the time that error recovery is underway. Moreover, isodata will typically flow through a buffer in a detector that recovers the isodata from the transmission stream.

It is also an advantage of one embodiment of the invention to maintain the fullness of the buffer during error recovery to avoid the failure of the data recovery process due to a buffer overflow or underflow.

After data are lost due to errors, it is an advantage of one embodiment of the invention to have a mechanism to check and restore the timing at which the successfully recovered isodata is presented as output from the isodata decoder, and to absorb timing errors caused by lost data.

Improved methods for detecting the occurrence of lost data are subject matter of one embodiment of the invention.

Additional provisions for ensuring the resumption of data presentation at the correct output time are also an advantage of the invention.

Still further, it is an advantage of one embodiment of the invention to provide a scheme for overcoming uncertainties in the contents of data packets in the event that the packets contain encrypted data after any decryption thereof should have already been completed.

The present invention provides methods and apparatus for detecting and recovering from errors in the processing of isodata at a decoder, which methods and apparatus enjoy the aforementioned and other advantages.

In accordance with an advantageous embodiment of the present invention, a method is provided for managing errors in isochronous data received in bursts from a packetized data stream carrying isodata presentation units in fixed length isodata transport packets. Each of the transport packets includes a packet identifier, abbreviated as PID. At least some of the packets contain a presentation time stamp, abbreviated as PTS, indicative of a time for commencing the fixed rate presentation of isodata presentation units from a buffer into which they are temporarily stored upon receipt. The data stream is monitored to detect PIDs identifying the isodata transport packets. The isodata transport packets identified by said PIDs are monitored to locate isodata PTSs. The presentation of said presentation units from said buffer is synchronized to a system time clock, abbreviated as STC, using timing information derived from the located isodata PTSs. Discontinuity errors are identified between successive ones of said isodata transport packets and, if a discontinuity of no more than one packet is identified, a write pointer of said buffer is advanced by a suitable number of bits to compensate for the discontinuity, while the synchronization of said presentation with respect to said STC is maintained.

First and second PTS pointers are provided, each for maintaining a different PTS value and address of the buffer to identify where a presentation unit referred to by the PTS value is stored. The synchronization of said presentation is maintained by (i) replacing the PTS value and address for one of the PTS pointers with a new PTS value and new address after data stored at the address associated with the replaced value has been presented from said buffer, (ii) when the new address is reached, suspending the presentation of data from the buffer if the STC is not equal to a presentation time derived from said new PTS value, and (iii) if the presentation has been suspended, recommencing the presentation of data from the buffer when the STC reaches the presentation time derived from the new PTS value.

New PTS values may be received over time from the isodata transport packets. In such an embodiment, a determination is made if both of the PTS pointers contain PTS values that have not yet been used to present data from said buffer when a new PTS value is received. If so, the PTS value and associated address in the most recently updated PTS pointer is replaced with the new PTS value and new address, thereby maintaining the oldest unused PTS value and address for use in synchronizing the presentation of the presentation units from said buffer.

In another advantageous embodiment, a PTS pointer is provided to maintain a current PTS value together. with an addres of said buffer identifying where a presentation unit referred to by said current PTS value is stored. The synchronization of the presentation is maintained by the further steps of (i) replacing the PTS value in the PTS pointer with a new current PTS value after data stored at said address has been presented from said buffer, (ii) replacing said address in the PTS pointer with a new address corresponding to a presentation unit referred to by the new current PTS value, (iii) when said new address is reached, suspending the presentation of data from said buffer if said STC is not equal to a presentation time derived from said new current PTS value, and (iv) if the presentation has been suspended, recommencing the presentation of data from said buffer when the STC reaches the presentation time derived from said new current PTS value.

The presentation units carried by the packetized data stream may be supplied by packetized elementary stream, abbreviated as PES, packets carrying the presentation units together with information indicative of the length of each PES packet. In such an embodiment, a determination is made as to whether an amount of presentation unit data actually received for a given PES packet differs from an amount of data that should be received as indicated by the PES packet length information. An error is indicated if the compared amounts of data do not match.

In the event of such an error, the PTS pointer is cleared. The presentation of data from the buffer is also temporarily stalled should additional presentation unit data continue to arrive in the absence of a new PES packet indicator after the PES packet length information indicates that all data has been provided for the given PES packet. The presentation of data from the buffer will recommence, based on a new PTS value provided in the PTS pointer, after the PTS pointer has been cleared.

A PTS extension may be retrieved from the identified isodata transport packets to enable the time resolution for presenting isodata presentation units to be increased. In this instance, the timing information can be determined by summing at least said PTS and said PTS extension. The timing information may alternatively be derived from the sum of said PTS, said PTS extension, and a PTS offset value used to provide a time delay.

The timing information can be compared to the STC to determine whether the presentation units are too early to be presented, too late to be presented, or ready to be presented from the buffer. Fill bits are provided as output until it is time to present the presentation units if the comparison determines that the presentation units are too early to be presented. The presentation of presentation units from the buffer is resynchronized if the comparing step determines that the presentation units will be presented too late. The presentation units are presented from the buffer if the comparing step determines that they are ready to be presented.

The synchronization of the presentation of the presentation units to the system time clock can be effected by comparing the STC to the timing information derived from the PTSs. Fill bits can then be provided as output until it is time to present said presentation units if said comparison determines that said presentation units are too early to be presented. As indicated above, the timing information can comprise the sum of at least a PTS and a PTS extension that enables the time resolution for presenting isodata presentation units to be increased. The fill bits are provided as output until a time designated by the STC equals the time designated by said sum. Alternatively, the timing information can comprise the sum of said PTS, said PTS extension, and a PTS offset value used to provide a time delay.

Each presentation unit can comprise an integer number N bits of isodata. An N-bit count is maintained that is correlated with the presentation of a first presentation unit from the buffer. Fill bits are continually provided as output after the STC equals the time designated by said sum until the N-bit count indicates that it is time to commence the presentation of a new presentation unit.

The isodata transport packets identified by the PIDs can be monitored to determine if any of them are designated as being encrypted after any encryption should have been removed. If only a single packet is designated as being encrypted after any encryption should have been removed, a write pointer of the buffer is advanced by a suitable number of bits to ignore the single packet. The synchronization of said presentation is maintained with respect to the STC during this procedure.

A decoder is provided for receiving and managing errors in isochronous data received in bursts from a packetized data stream carrying isodata presentation units in fixed length isodata transport packets. Each of the transport packets includes a packet identifier (PID) and at least some of the packets contain a presentation time stamp (PTS) indicative of a time for commencing the fixed rate presentation of isodata presentation units from a buffer into which they are temporarily stored upon receipt. Means are provided for monitoring the data stream to detect PIDs identifying said isodata transport packets. Means are also provided for monitoring the isodata transport packets identified by said PIDs to locate isodata PTSs. The presentation of said presentation units from said buffer is synchronized to a system time clock (STC) using timing information derived from the located isodata PTSs. Means are provided for identifying discontinuity errors between successive ones of said isodata transport packets and, if a discontinuity of no more than one packet is identified, a write pointer of said buffer is advanced by a suitable number of bits to compensate for the discontinuity, while maintaining the synchronization of said presentation with respect to said STC.

The decoder may also incorporate the other error management features of the methods described above.

### BRIEF DESCRIPTION OF THE DRAWINGS

Figure 1 is a diagrammatic illustration showing how elementary stream data is packaged into transport packets;
Figure 2 illustrates the PES and isochronous data headers referred to in Figure 1 in greater detail;
Figure 3 is a block diagram of encoder apparatus for assembling the transport packets referred to in Figure 1;
Figure 4 is a block diagram of decoder apparatus for recovering the isochronous data carried by the transport packets;
Figure 5 is a block diagram showing portions of Figure 4 in greater detail; and
Figure 6 is a state diagram illustrating the acquisition and tracking of isochronous data in accordance with the present invention.

### DETAILED DESCRIPTION OF THE INVENTION

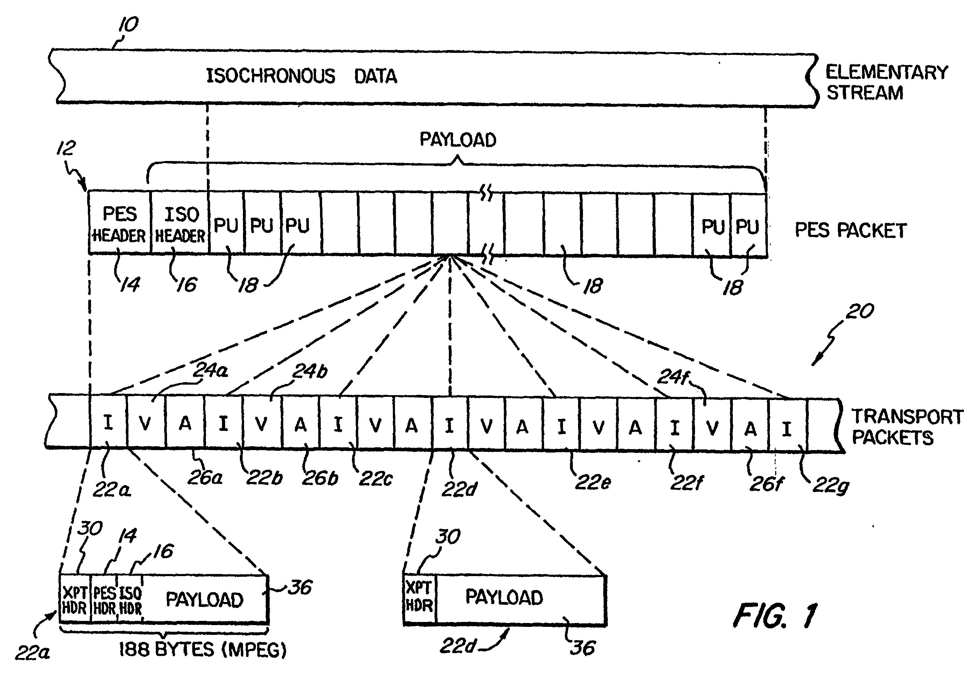

Figure 1 is a diagrammatic illustration showing how different digital service components can be multiplexed into a stream of transport packets. Multiplexing is accomplished by packaging raw elementary streams such as coded video, audio and data into PES packets and then encapsulating these into transport packets. The figure is illustrative only, since a PES packet, such as packet 12 illustrated, may translate into more or less than the seven transport packets 22a-22g illustrated.

In the example of Figure 1, an elementary stream generally designated 10 comprises a serial stream of data bits, such as the isochronous data shown. It should be appreciated that other types of data can be provided in the elementary stream for transmission in accordance with the present invention. Similar elementary streams will be provided for compressed video and audio data in accordance with the MPEG-2 transport standard.

The first step in forming a transport packet stream is to encapsulate the elementary stream for each type of data into a corresponding packetized elementary stream (PES) formed from successive PES packets, such as packet 12 illustrated. Each PES packet contains a PES header 14 followed by a PES payload containing an integer number of presentation units (PU) 18. The payload comprises the ultimate information that is desired to be communicated from a transmission site for recovery at a receiving site. The PES header 14 contains information useful in processing the payload data, such as the presentation time-stamp (PTS) in accordance with the MPEG-2 systems specification.

In accordance with the present invention, an isochronous data header (ISO header) 16 follows the PES header 14 as part of the PES packet payload. The presentation units 18 of the payload follow the ISO header 16. The ISO header is described in greater detail below.

The header and payload data from each PES packet is split into individual fixed length transport packets 22, 24, 26, each containing a transport header 30 and payload data 36. The payload data of each transport packet will contain a portion of the payload data (i.e., presentation units 18) of the corresponding PES packet 12 and may also contain the PES header 14 and ISO header 16, as illustrated at 22a. Transport packet 22d is another isochronous data transport packet in the transport packet multiplex 20. This transport packet includes a transport header 30 as well as payload 36. The payload does not include a PES header or ISO header because this transport packet is derived from payload data that is subsequent to the PES header and ISO header in the PES packet. In other words, since there is only one PES header and one ISO header per PES packet, only the first transport packet derived from that PES packet will contain the PES header and ISO header. The payload segments of the remaining transport packets derived from the PES packet will contain only portions of the actual information data to be transmitted.

In accordance with the MPEG-2 systems specification, the transport packet headers 30 will contain the program identifier (PID) which distinguishes each transport packet stream, such as an isochronous data packet stream, a video packet stream, or an audio packet stream, from other packet streams. In Figure 1, only the derivation of the isochronous data transport packets 22 is shown. In order to derive video packets 24 and audio packets 26, corresponding elementary streams (not show n) are provided which are encapsulated into PES packets and transport packets in essentially the same manner illustrated in Figure 1 with respect to the formation of the isochronous data packets 22, except that the isochronous data header 16 of the present invention is not provided in the video or audio transport packets.

Each MPEG transport packet contains 188 bytes of data, formed from the transport header 30 of at least four bytes and payload data 36, which can be up to 184 bytes. In accordance with the MPEG-2 systems specification, an adaptation field of, e.g., eight bytes may be provided between the transport header 30 and payload 36. The variable length adaptation field can contain, for example, the program clock reference (PCR) used for synchronization of the decoder's system time clock.

The plurality of isochronous data packets 22a, 22b, 22c ... 22g ..., and other packets 24a-f ... and 26a-f ... is multiplexed as illustrated in Figure 1 to form the transport stream 20 that is communicated over the communication channel from the encoder to the decoder. The purpose of the decoder is to demultiplex the different types of transport packets from the transport stream, based on the PIDs of the individual packets, and to then selectively process each of the isochronous data, audio and video components for use in reconstructing a television signal and recovering a data stream represented by the isochronous data.

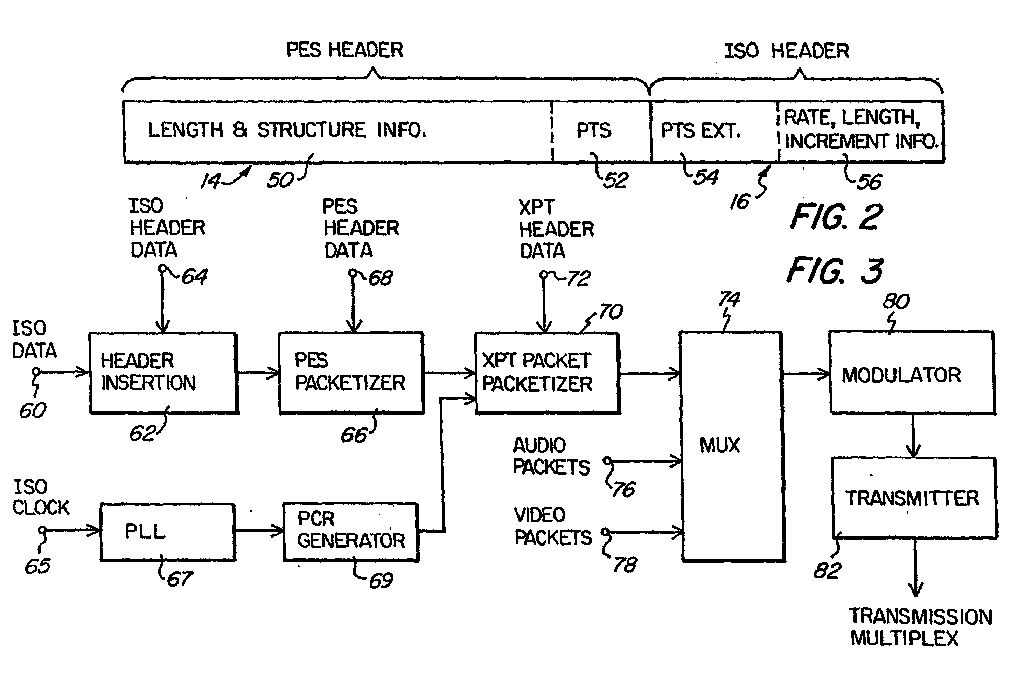

Figure 2 illustrates the PES header 14 and ISO header 16 in greater detail. The PES header 14 includes various length and structure information 50 in accordance with the MPEG-2 systems specification. An optional PTS field 52 may follow the length and structure information 50. In the event a PTS is provided, a counterpart PTS extension is provided in the ISO header 16. As illustrated in Figure 2, the PTS extension 54 is preferably provided at the beginning of the ISO header 16 such that it immediately follows the PTS 52 in the PES header. The present invention is not limited, however, to providing the PTS extension at the beginning of the ISO header. The PTS extension can be provided elsewhere in the ISO header, as long as it can be detected at the decoder for use in appending it to the PTS to extend the time resolution for presenting the isochronous data at the output of the decoder. By providing an additional eight bits, for example, in the PTS extension to be added to the thirty-three bits provided in the PTS specified in MPEG's systems specification, the standard MPEG-2 resolution of 11.1 microseconds can be extended to 74 nanoseconds for unambiguous determination of the correct presentation unit start time referenced by an extended isochronous data PTS.

The ISO header also includes various rate, length and increment information 56. More particularly, the rate, length and increment information will include a data rate flag, an isochronous data header length field, and an increment field specifying a ratio of the information data rate (e.g., the isochronous data rate) to a system clock frequency. This clock increment value enables a direct digital synthesis clock at a decoder to provide a clock signal at the information data rate for use in outputting information data carried by a data transport stream in accordance with the present invention.

In a preferred embodiment of the invention, each isochronous data presentation unit 18 (Figure 1) is sixteen bits in length, i.e., one word of two eight-bit bytes. The isochronous data is aligned with the PES syntax in that the first byte of the isochronous data header immediately follows the last byte of the PES header. Also, the isochronous data presentation units are aligned with the PES syntax in that the first byte of the first presentation unit in a given PES packet immediately follows the last byte of the isochronous data header. Isochronous data presentation units are aligned with transport packet payloads such that the first payload byte of an isochronous data transport packet is the first byte of an isochronous data presentation unit (following any adaptation, PES header and isochronous data header fields). The last byte of an isochronous data transport packet is the last byte of an isochronous data presentation unit.

The syntax of isochronous data in accordance with the present invention is described below using the formal grammar utilized by the MPEG-2 systems specification. The MPEG grammar is a C-language-like syntax and is a method of describing continuous and possibly variable rate sequences of bits, instead of specifying a procedural program and its functions as in the computer language C. The first column of the syntax contains the syntax element. The second column gives the length of the syntax element in bits and the third column identifies the syntax type. The types are bslbf (bit sequence left-most bit first) and uimsbf (unsigned integer most significant bit first). The notation "isochronous_data_header() {...}" indicates that the syntax elements within the braces are a named set and may be invoked elsewhere in the syntax by simply using the designation "isochronous_data_header()". A conditional occurrence of bit structures may be indicated with the usual "if" tests. The customary relational operators well known in the C-language are also available. Loop structures are possible and use the standard C loop syntax. The syntax table is accompanied by a set of semantics, providing definitions for each previously undefined syntax fields and placing constraints on their use.

The following isochronous data bitstream syntax and bitstream semantics represent a preferred embodiment of the present invention:

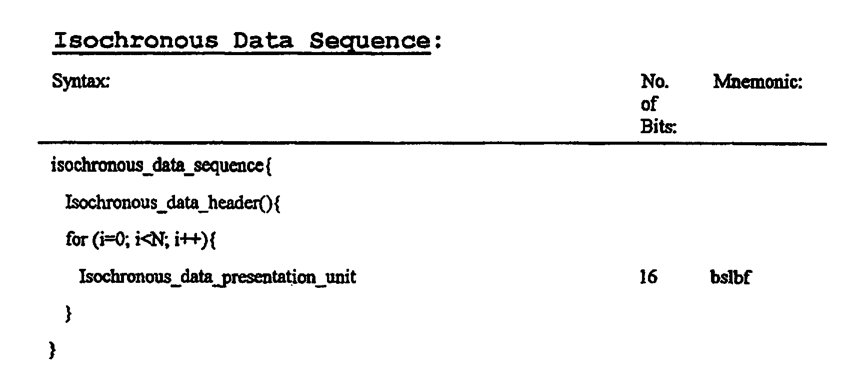

### Isochronous Data Header:

To constrain each isochronous data sequence to an even number of bytes, the last reserved field in the isochronous data header is specified to be an even number of bytes. The syntax for isochronous data headers is:

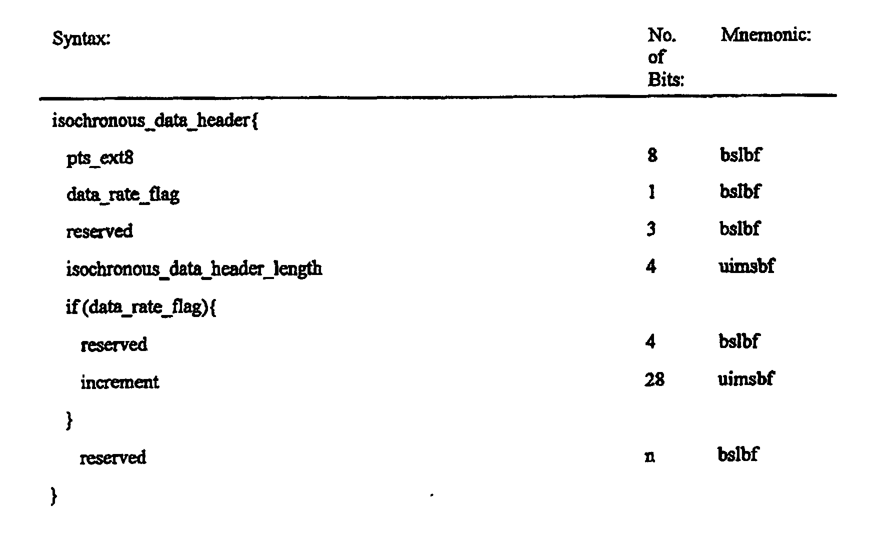

### Isochronous Data Bitstream Semantics:

### Isochronous Data Sequence:

**Isochronous_data_presentation_unit** -- A 16 bit presentation unit of isochronous data where the first (left) bit is presented (output) before the second bit, etc.

### Isochronous Data Header:

**pts_ext8** -- An 8-bit field extending the PTS conveyed in the PES header of this PES. This field is the 8 most significant bits of the 9 bit PCR extension defined in the MPEG-2 systems specification, and is used in accordance with the present invention to extend the time resolution of isochronous data PTSs from the MPBG-2 systems specification resolution of 11.1 microseconds (90 kHz) to 74 nanoseconds (13.5 MHz) for unambiguous determination of the correct presentation unit start time referenced by an isochronous data PTS.

**data_rate_flag** -- A one bit flag which, when set to "1", indicates that an increment field is present in the isochronous data header.

**isochronous_data_header_length** -- A 4 bit field indicating the number of words (16 bits) of isochronous data header which follow this field including the reserved words, (units of 16 bits forces the isochronous data header to be an even number of bytes which, coupled with isochronous data presentation units, adaptation fields, and PES header also being an even number of bytes, allows isochronous data transport packets to be generated without any padding bytes and thus higher efficiency).

**increment** -- A 28 bit field which indicates the isochronous data clock increment value and takes on a value that describes the exact ratio of the isochronous data rate to a phase locked reference clock, e.g., an MPEG-2 27 MHz reference. In a preferred embodiment, increment is:
increment = NINT(isochronous data rate *536,868,000/nominal_system_clock_frequency); where:
nominal_system_clock_frequency is specified by MPEG as 27 MHz and "NINT" means "nearest integer." As noted above, MPEG allows a 30 PPM variability from the nominal system clock frequency.

**reserved** -- An n-bit field of reserved words of which the decoder assumes no particular value.

The block diagram of Figure 3 illustrates a possible encoder for implementing the present invention. Isochronous data (e.g., from elementary stream 10 - Figure 1) is input via terminal 60 to a header insertion stage 62 which inserts the data required to assemble the ISO header 16. This data is obtained, for example, from a system microprocessor, not shown. The isodata with the inserted ISO header is received by a PES packetizer stage 66 that inserts the PES header 14 which has been assembled from PES header data input via terminal 68. As with the ISO header data, the PES header data can be obtained from a system microprocessor or other data source as well known in the art.

An isochronous data clock signal is input via terminal 65 to a phase lock loop (PLL) 67 of the encoder of Figure 3. The PLL can comprise, e.g., a 27 MHz oscillator and DDS circuit to lock to the input clock signal, using the nearest increment value as calculated above. PCR values are then generated by a PCR generator 69. The PCR values are input as transport adaptation data to a transport packet packetizer 70, described in further detail below.

Once the ISO header and PES header have been inserted into the isochronous data elementary stream, the subsequent payload data input via terminal 60 is segmented to follow the headers in the form of fixed length presentation units 18. The result is a succession of PES packets 12 which are output from PES packetizer 66 to the transport packet packetizer stage 70. At this point, data necessary to assemble the transport header is received via terminal 72 in a conventional manner and assembled into a transport header, to which counterpart payload data is appended. The payload data comprises the next portion of data (i.e., PES header data, ISO header data and/or presentation units) from the current PES packet(s). The output of packetizer 70 is a series of isochronous data transport packets 22 which will each comprise a transport header and payload and may or may not include PES header and isochronous data header information as part of the payload.

The isochronous data transport packets from packetizer 70 may be multiplexed with compressed audio packets and video packets input to a multiplexer 74 via terminals 76 and 78, respectively. The audio and video packets are provided in accordance with the MPEG-2 systems specification, as well known in the art. Multiplexer 74 assembles the transport packets into a transport packet stream 20 (as shown in Figure 1). The transport packet stream is modulated in a conventional modulator 80 and transmitted by a conventional transmitter 82 via a satellite, cable or other known communication channel.

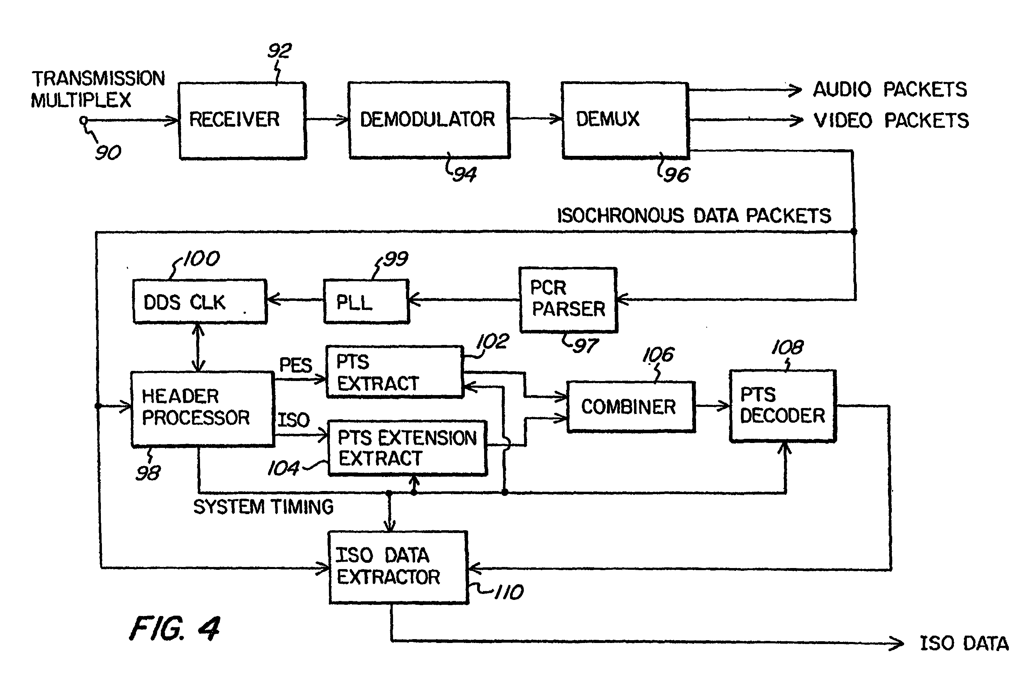

Figure 4 illustrates a receiver ("decoder") for the transmission multiplex output from the encoder of Figure 3. The transmission multiplex is input to a receiver 92 via terminal 90, and demodulated in a conventional demodulator 94. A demultiplexer 96 recovers the audio packets, video packets and isochronous data packets from the demodulated transport packet stream. The isochronous data packets are input to a header processor 98 which can comprise a conventional microprocessor programmed to recover the PES header and ISO header from the isochronous data packet stream. The PTS is extracted from the PES header in a PTS extraction stage 102. The PTS extension is extracted from the ISO header by a PTS extension extraction stage 104. The PTS and PTS extension are combined in a combiner 106 to provide the isochronous data PTSs that enable the high rate isochronous data to be accurately presented in time. A PTS decoder 108 extracts the timing information from the extended isochronous data PTSs output from combiner 106. This timing information is input to an isochronous data extractor 110 that also receives the isochronous data packets from demultiplexer 96. System timing information from the header processor 98 enables the extraction stages 102, 104, the PTS decoder 108 and the isochronous data extractor 110 to properly locate and process the data presented to each stage. The isodata extractor 110 responds to the PTSs from PTS decoder 108 in order to present the individual isochronous data presentation units (the recovered "isodata") at the appropriate time. The presented isodata is output from isodata extractor 110 for use in providing a desired service based on the information embodied in the data.

The decoder of Figure 4 also includes a DDS clock 100 that is used to provide a plurality of reference clock rates used by the header processor and/or other components of the decoder. The system timing output from header processor 98 is based on one or more of the reference clock rates provided by the DDS clock. These reference clock rates are based on a system clock frequency, for example, the 27 MHz system clock frequency set forth in the MPEG-2 systems specification. In order to process PCRs to generate the system clock frequency for use by the DDS, the decoder includes a PCR parser 97 that extracts PCR values from isochronous data transport packets. The extracted PCR values are used to lock a phase lock loop 99 that generates the system clock (e.g., 27 MHz). The system clock is input to the DDS clock 100 for use in generating the reference clock rates described above.

In order to simplify the decoder, a clock "increment" is provided in the isochronous data header to specify the ratio of the isochronous data rate to the system clock frequency. This increment is recovered by the header processor 98 and input to the DDS clock 100, which uses the increment to provide a clock signal at the isochronous data rate for use in presenting the isochronous data.

The provision of a clock increment in the isochronous data header obviates the need for the decoder to have to compute this increment on its own. In conventional systems using a direct digital synthesis clock, the decoder receives a required clock frequency indicator with the data to be recovered. The clock frequency indicator specifies the actual clock frequency that is to be synthesized by the DDS clock. Since the DDS clock scales an existing system clock in order to produce various fixed clock frequencies, conventional decoders must first determine the ratio of the desired clock frequency to the system clock frequency from which the desired clock frequency is to be derived. The processing hardware necessary to perform this function adds cost and complexity to the decoder.

In a digital television decoder, cost must be kept to a minimum since a separate decoder will be required for each of the potentially millions of televisions in the field. By providing the decoder with an increment that can be directly used by the DDS clock to produce the desired frequency, the receiver complexity and cost is reduced. In the system of the present invention, the computation of the increment necessary to provide the desired frequency is done centrally at the encoder, which serves the millions of decoders in the field. The decoders therefore do not need to perform this computation.

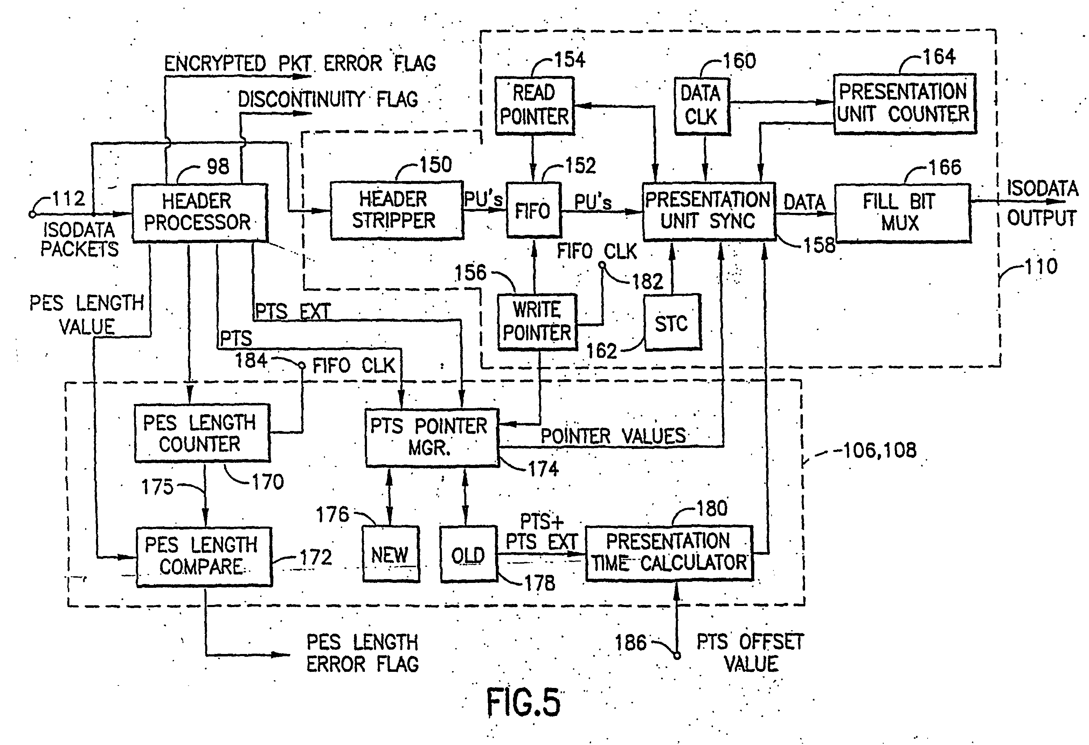

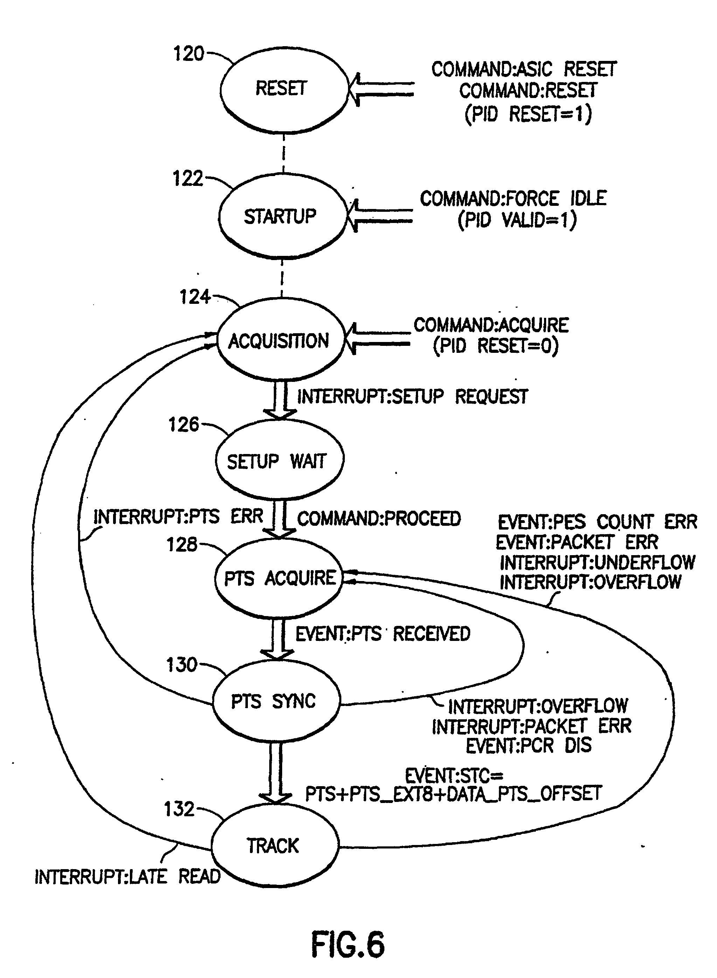

Figure 5 illustrates the combiner 106, PTS decoder 108, and isodata extractor 110 of Figure 4 in greater detail. Isodata packets, detected by their PIDs in an incoming data stream, are input to header processor 98 and a header stripper 150 via a terminal 112. The header stripper 150 is part of the isodata extractor 110, and strips the transport, PES and isodata headers from the received packets so that just the presentation units (PUs) are provided as output to a first-in first-out register (FIFO) 152. FIFO 152 buffers the PUs in accordance with the invention so that proper synchronization and error recovery can be accomplished. The FIFO may be implemented using a series of FIFOs such as a pre-DRAM FIFO, a DRAM FIFO, and a post-DRAM FIFO. In such an implementation, references herein to reading from the isodata FIFO are referenced to the last FIFO used, e.g., a post-DRAM FIFO. A read pointer 154 and write pointer 156 are provided to control the writing of data to and reading of data from FIFO 152. Write pointer 156 is synchronized to a FIFO clock via terminal 182. A detailed description of the buffer operation is provided below in connection with the description of Figure 6.

The presentation units from the FIFO 152 are provided as output to a presentation unit synchronization circuit 158. This circuit synchronizes the presentation unit data to the system time clock (STC) 162. A data clock 160, which runs at the fixed rate at which the isodata is ultimately output, is coupled to the presentation unit sync circuit 158 and to a presentation unit counter 164. This arrangement is used to ensure that the presentation of isodata from the FIFO commences at the first bit of a presentation unit. The data presented from the FIFO is input to a fill bit multiplexer (MUX) 166, which is used to provide fill bits when necessary to recover from errors that occur in the input data stream. The output of the fill bit multiplexer 166 comprises the recovered isodata which may include fill bits in place of corrupted or missing data.

The presentation unit sync circuit 158 also receives necessary pointer values and the correct presentation time from PTS decoder 108. In Figure 5, the functions of PTS decoder 108 are grouped together with the functions of combiner 106. As noted above in connection with Figure 4, combiner 106 provides the isochronous data PTSs that enable the high rate isochronous data to be accurately presented in time.

Circuits 106 and 108 comprise a PES length counter 170 and a PES length compare circuit for determining if the length of each received PES packet corresponds to the length designated for that packet in the corresponding PES header. The PES length value extracted from the PES header is supplied to the PES length compare circuit 172 by header processor 98. PES length counter 170 receives the FIFO clock via terminal 184, and determines the length of each received PES by counting the bytes contained therein, one byte per FIFO clock cycle. PES length counter 170 receives information designating the beginning of each new PES packet from header processor 98, and in turn supplies the length counted for each PES packet to PES length compare circuit 172 via line 175. In the event that the counted length does not match the PES length indicated in the PES header, a PES length error flag is generated. Other error flags, which are generated by header processor 98, include an encrypted packet error flag and a discontinuity flag. An isochronous data microprocessor (not shown) receives the various error flags and provides control signals for responding to the error conditions. These error flags are discussed in greater detail below.

The function of combining the PTS and PTS extension are provided by a PTS pointer manager 174. PTSs and PTS extensions are carried in certain of the isodata headers detected by header processor 98, which passes these values to the pointer manager. The pointer manager stores the PTS and PTS extension values in new and old pointer registers 176, 178, respectively. The combined oldest value is output to presentation time calculator 180 for use in computing the time at which isodata presentation units are to start being presented from the isodata extractor 110. The write pointer 156 keeps the pointer manager advised as to the most recently written FIFO address, so that the pointer manager can supply the FIFO address value of each PTS pointer.

A PTS offset value is provided to the presentation time calculator 180 via terminal 186. This offset value provides any time delay that is necessary to absorb recoverable transport timing errors. More particularly, the offset enables the FIFO to collect enough data to output a continuous data stream despite the MPEG specification's allowable STC error and a decoder's STC tracking loop transient behavior, and allows the FIFO to accumulate an amount of data necessary to survive the loss of a packet without underflowing.

Turning now to the state diagram of Figure 6, isodata processing commences at 120 when the system is reset. The isodata output mode is tristated and the isodata PID will be set to invalid at reset. A startup sequence then commences during which the isodata PID is programmed to the PID of the isodata service component before setting the isodata PID to valid. When the isodata PID is written to, the isodata FIFO 152 will be flushed and both PTS pointers 176 and 178 cleared. The FIFO may be flushed by simply setting the read and write pointers 154, 156 to the same address and clearing any pre and post FIFOs. A PTS pointer can be cleared by simply resetting its in-use flag. When the isodata PID is set to valid, the isodata output mode will be set to muted_clock_and_data and acquisition shall begin. In the event the isodata PID returns to the invalid state, the isodata output mode will be set to muted_clock_and_data (if it is not already in this state) and the startup sequence will recommence. If the isodata output mode is set to muted_data, processing of isodata will continue as normal, and the startup state will not necessarily be returned to.
The acquisition state commences at 124 by receiving isodata transport packets on the isodata PID and waiting for a packet with its payload_unit_start_indicator set (indicating that a PES starts with the first byte of the packet's payload). The isodata header will be parsed, to find a data_rate_flag which is set and to find and record the data clock increment value, if present. If the data_rate_flag is set, the increment value will be stored into a register and the system microprocessor will be interrupted to indicate that the increment value has been received on the isodata PID. The process of searching for the increment value in each isodata header will continue until the increment value is received.

Processing will then proceed to the setup wait state 126. At this point, once the increment value is in the register, processing will wait until a register flag is set indicating that isodata acquisition is to proceed. Acquisition will then continue after the microprocessor has verified that a PCR has been received (e.g., on the isodata PCR PID), has programmed any necessary data modulus and increment registers, and has programmed the data_PTS_offset register. The PTS acquire state 128 is then entered.

In the PTS acquire state, the isodata output mode is set to muted_clock_and_data. Reception of isodata transport packets then resumes, and a search commences for a PES header which contains a PTS. No isodata presentation units are written to the FIFO while in this state.

To aid error detection, each received payload byte on the isodata PID is counted for comparison to the PES length indicated in each PES header. Thus, as each PES start is received, the PES length is stored into PES counter 170. This counter is decremented by one as each PES byte is parsed. When a PTS is received, the PTS value is stored into one of the two PTS pointer registers 176, 178. Parsing of the isodata header (which must exist in this same packet) then proceeds and the pts_ext8 is retrieved and stored with the PTS that was written in the PTS pointer register in the previous step. Processing then proceeds by writing all the presentation units in this packet to the FIFO 152 and also storing the FIFO address at which the first presentation unit is stored. This FIFO address shall be stored with the PTS and pts_ext8 written to the PTS pointer register during the above steps, and then the particular PTS pointer register will be marked as "in-use."

Once a PTS is received with the corresponding isodata presentation unit, the presentation unit synchronizer 158 will begin waiting for PTS sync as shown at 130. This shall consist of keeping the isodata output mode at muted_clock_and_data until the STC 162 equals the value of PTS+pts_ext8+data_PTS_offset supplied by presentation time calculator 180. When this instant occurs, the presentation unit counter 164 (which is a 4 bit counter incremented by the isodata clock 160) is set to the value 8₁₀ (1000₂). This will prepare the presentation unit synchronizer to begin output of the first bit of the presentation unit when the presentation unit counter reaches 0₁₀ (0000₂). This process of setting the presentation unit counter to 8₁₀ shall only be executed when the acquisition state has been entered since the PTS_Sync state was last entered. Once the presentation unit counter reaches 0₁₀, the isodata output mode is set to unmuted and presentation of the isodata from FIFO 152 commences beginning with the first bit of the presentation unit at the head of the FIFO. Presentation continues with the FIFO outputting one isodata bit per isodata clock.

If at any time, while waiting for PTS sync, STC is greater than PTS+pts_ext8+data_PTS_offset, processing will be interrupted, the FIFO will be flushed, the PTS pointers will be cleared, and the acquisition state 124 will be recommenced. While waiting for the PTS sync (STC = PTS+pts_ext8+data_PTS_offset), reception and processing of packets shall continue. The presentation units of each packet will be placed into the FIFO, but the isodata header will not. Also, while in this state, when a PTS is received, the PTS value will be stored in the second PTS pointer register along with the pts_ext8 and FIFO address associated with it. If, when a PTS if received, both PTS pointer registers are occupied, the new PTS pointer shall overwrite the PTS pointer most recently written (newest PTS pointer).

Once the output of isodata is commenced, tracking begins as indicated at 132. In this state, data will continue to be presented from the FIFO 152 at the rate of the isodata clock 160. Also, isodata transport packets will continue to be processed, writing each presentation unit into the FIFO, and storing PTS pointers. In the event the isodata FIFO is found to be full when an presentation unit needs to be stored (FIFO overflow), the process will be interrupted, the FIFO flushed, the PTS pointers cleared, and the PTS acquire state 128 will be returned to after setting the isodata output mode to muted_data. In the event the isodata FIFO is found to be empty when an presentation unit needs to be output (FIFO underflow), the processing will be interrupted, the FIFO flushed, the PTS pointers cleared, and the PTS acquire state 128 will be returned to after setting the isodata output mode to muted_data.

One field included in each isodata transport packet is a field that contains two transport_scrambling control bits, indicating whether the data in the transport packet is encrypted. When an isodata transport packet is received with its transport_scrambling_control bits set to anything other than not_scrambled, this condition will be treated identically to reception of an isodata transport packet which has its transport_error_indicator set.

Transport packets also contain a continuity counter. When an isodata transport packet is received with its continuity_counter not equal to the continuity_counter value of the last packet received plus one modulo 16 (packet discontinuity error), the following steps will be taken:
1. If the discontinuity indicates a redundant packet has been received, the redundant packet shall be discarded.
2. If the discontinuity indicates two or more packets were lost, the PTS pointers will be cleared, the isodata output mode will be set to muted data, and the PTS acquire state 128 will be returned to.
3. If the discontinuity indicates one packet was lost, then:
   A. If the PES counter indicates 184 or more bytes remain to be received for the current PES, the PES counter will be decremented by 184 and the FIFO write pointer will be advanced by 184 byte addresses (92 words) to effectively insert 184 bytes into the FIFO to compensate for the lost packet's payload. It should be noted that when the number of bytes lost with a missing packet is less than the number of bytes inserted into the FIFO, it is possible that the FIFO will overflow.
   B. If the PES counter indicates exactly zero bytes remain to be received for the current PES, the PES counter will be set to the value of the previous PES_packet_length, the PES counter will be decremented by 178 and the FIFO write pointer will be advanced by 164 byte addresses. When the number of bytes lost with a missing packet is less than the number of bytes inserted into the FIFO, it is possible that the FIFO will overflow.
   C. If the PES counter indicates N (between one and 183) bytes inclusive remain to be received for the current PES, the PES counter will be decremented by N and the FIFO write pointer will be advanced by N byte addresses to effectively insert N bytes into the FIFO to compensate for the lost packet's payload. When the number of bytes lost with a missing packet is less than the number of bytes inserted into the FIFO, it is possible that the FIFO will overflow.

As PES data is parsed, the value of the PES counter will be monitored. If a PES byte is parsed when the PES counter is zero (before decrementing the counter to account for the current PES byte), and this byte is not the first byte of a new PES, too many bytes were written to the FIFO due loss of one or more previous transport packets. When this occurs, the process will stop writing isodata presentation units to the FIFO beginning with the current byte and shall return to the PTS acquire state after flushing the FIFO and clearing the PTS pointers.

After each presentation unit is removed from the FIFO, the process detects when the FIFO read pointer equals the DRAM offset address of the oldest PTS pointer. When this occurs, timing is verified in the following manner:

If the STC is less than
PTS+pts_ext8+data_PTS_offset of the corresponding PTS pointer, as will be the case when isodata is lost, fill bits (e.g., zeros) will be output for isodata until
STC=PTS+pts_ext8+data_PTS_offset. At this time, fill bits will continue to be output for isodata until the presentation unit counter equals 0₁₀ (0000₂). When this occurs, reading of isodata presentation units from the FIFO will resume and this data will be presented as isodata. If the STC is greater than or equal to PTS+pts_ext8+data_PTS_offset of the corresponding PTS pointer, normal isodata processing will continue.

During isodata processing, timing will be monitored in the following manner:
If, during the time interval that the presentation unit counter first equals zero after STC=PTS+pts_ext8+data_PTS_offset of a PTS pointer, the FIFO read pointer does not equal the FIFO address of the corresponding PTS pointer, the processing will be interrupted (FIFO output late error) and the enter acquisition state 124 will be reentered.

In a preferred implementation of the process described above, the following specifications are used:
**data_PTS_offset --** a 13 bit value representing the number of PTS clock ticks which is added to each PTS value and pts_ext8 value to control the time delay applied to isodata. This value has units of 11.1 µseconds and allows isodata to be delayed by as much as 90.9 milliseconds.
**PTS Pointer --** Each PTS pointer shall include the following fields, allowing a particular presentation unit in the FIFO to be pointed to and allowing the time at which it is to be presented to be stored with a resolution of 74 nanoseconds.
   - **PTS --** A 16 bit field with units of 11.1 µseconds which stores the 16 least significant bits of the corresponding presentation unit's PTS. 16 bits allows isodata to remain in the FIFO for as long as 727.4 milliseconds.
   - **PTS _Ext8 --** An 8 bit field with units of 74 nanoseconds which stores the upper 8 bits of the 9 bit pcr_extension specified by MPEG in *Generic Coding of Moving Pictures and Associated Audio,* International Standards Organization, ISO/IEC 13818-1, Systems International Standard, November, 1994. This field corresponds to the time stamp of the presentation unit and extends the time resolution of isodata time stamps beyond the standard of 11.1 µseconds specified by MPEG to 74 nanoseconds.
   - **DRAM Offset Address --** A 12 Bit DRAM word offset address relative to the isodata base address which points to the DRAM word of the FIFO at which the corresponding presentation unit is stored. 12 bits allows the FIFO to be as large as 4096 words.
   - **in-use Flag --** A one bit flag to allow the status of a PTS pointer to be determined. When set, this flag indicates the PTS pointer is in-use in that it contains a valid set of values. Every pointer shall have this flag cleared after a reset of the isodata process.

### PTS Pointer Maintenance

The two PTS pointer registers 176, 178 are maintained in the following manner:
I. After reset, all PTS pointer register in-use flags are reset (set to not in-use).
II. As a PTS value is received, the PTS value in the PES header is stored in the PTS field of the OLD PTS pointer register.
III. The pts_ext8 field is then parsed from the isodata header and stored in the pts_ext8 field of the OLD PTS pointer register.
IV. After a new PTS value is stored into a PTS pointer register, isodata processing continues. If the next presentation unit is received and written into the FIFO correctly, the DRAM offset address which corresponds to the FIFO address holding the first byte of the presentation unit is stored in the pointer's DRAM offset address field. The next presentation unit is received and written into the FIFO correctly when no data is lost for any reason between reception of the PTS value and reception of the first presentation unit of the same PES_packet. With this accomplished, the PTS pointer is valid and will be marked as in-use by setting the in-use flag of the same PTS pointer register and will be considered the newest PTS pointer in subsequent processing.
V. When a PTS pointer is being recorded and none of the PTS pointer registers are in-use, the pointer is recorded into OLD PTS pointer register.
VI. When the OLD PTS pointer register is in-use when a new pointer is ready to be recorded, the new pointer will be recorded into the NEW PTS pointer register.
VII. When both of the PTS pointer registers are in use, the new pointer will be recorded by overwriting the NEW PTS pointer.
VIII. The PTS pointers are employed as specified in the preceding description of the track state 132.
IX. Once used as specified in the track state, the NEW PTS pointer shall be transferred to the OLD PTS pointer and the NEW PTS pointer shall be marked unused by clearing its in-use flag so that the NEW pointer register is used to store the next PTS pointer.
X. When a transport packet is received on the isodata PID with the discontinuity_indicator bit of its adaptation field set, the in-use flag of all PTS pointer registers shall be cleared and no PTS pointers shall be stored until the next PCR value is received (e.g., on the isodata PCR PID).

To aid error detection, each received payload byte on the isodata PID is counted for comparison to the PES_packet_length indicated in each PES header as defined by MPEG. Thus, as the beginning of each PES_packet is received, the PES_packet_length will be stored into PES length counter 170. This counter will be decremented by one as each PES byte is parsed. Further, this counter will be used and maintained as specified for the track state 132.

In addition to the PES length counter, the preferred system maintains the aforementioned presentation unit counter 164. The presentation unit counter is a 4 bit counter which is incremented by the isodata output clock. This counter is set to 8₁₀ (1000₂) upon output of the first isodata presentation unit from the FIFO as described for the PTS sync state 130. Subsequent entries into the PTS sync state shall not set or reset this counter unless the acquisition state 124 has been entered since the last entry into the PTS sync state.

Four isodata output modes are implemented as follows:
1. Tristated - in this mode, both the isodata clock and data outputs are tristated;
2. Muted_clock_and_data - in this mode, both the isodata clock and data outputs shall be low (e.g., zero) ;
3. Muted_data - in this mode, only the isodata output is low while the isodata clock is active;
4. Unmuted - in this mode, neither the isodata or clock outputs are muted (not active).

A unique error flag is set for each error condition, which will be reset after the flag is read. Each error condition which interrupts the isodata process is maskable. Table 1 lists the various error conditions related to isodata processing and the system's response to the error. The following defines the table's contents:
**Name** - A name assigned to each error condition for reference elsewhere herein.
**Definition** - A definition of the conditions which indicate the corresponding error has occurred.
**Int**
   yes - Indicates that isodata processing is to be interrupted when this error occurs.
   no - Indicates that isodata processing is not interrupted when this error occurs.
**Check State and Next State**
   >"state" - Indicates this error will be detected when the current isodata processing state is higher than "state". The following list defines the isodata processing state hierarchy:
      1. Reset Lowest
      2. Startup
      3. Acquisition
      4. Setup_Wait
      5. PTS_Acquire
      6. PTS_Sync
      7. Track Highest
   ≥"state" - Indicates this error shall be detected when the isodata processing state is equal to or higher than "state".
   startup, acquisition, setup_wait, pts_acquire, pts_sync, or track - Indicates this error shall be detected in this state or that isodata processing shall proceed to this state after the associated actions are carried out.
   same - Indicates that isodata processing will stay in the same state after the associated actions are carried out.
   all - Indicates this error will be detected when it occurs in any processing state.
**FIFO Action**
   flush - Indicates that the FIFO is flushed by setting the FIFO read and write pointers to be equal to the FIFO's DRAM base address.
   none - Indicates no change from normal FIFO management shall occur.
**Pointer Action**
   clear - Indicates the PTS pointers are returned to the state specified as if the process had been reset.
   none - Indicates no change from normal pointer management shall occur.
   see other actions - Indicates Other Actions may indicate a pointer to be set or reset, otherwise treated as none.
**Output Mode** - States the output mode to which the processor shall transition.
**Other Actions** - States any additional actions required as a result of the error.

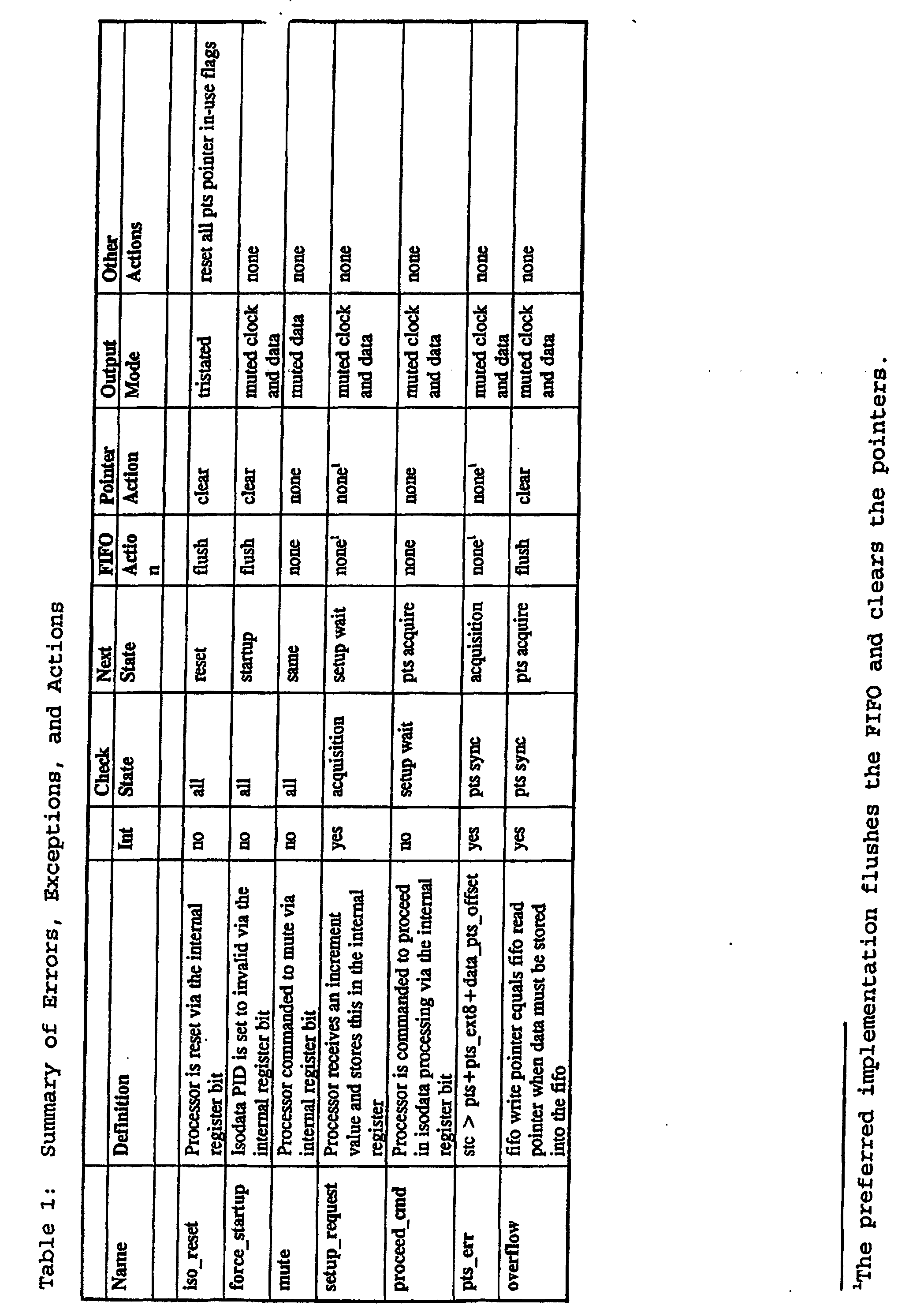

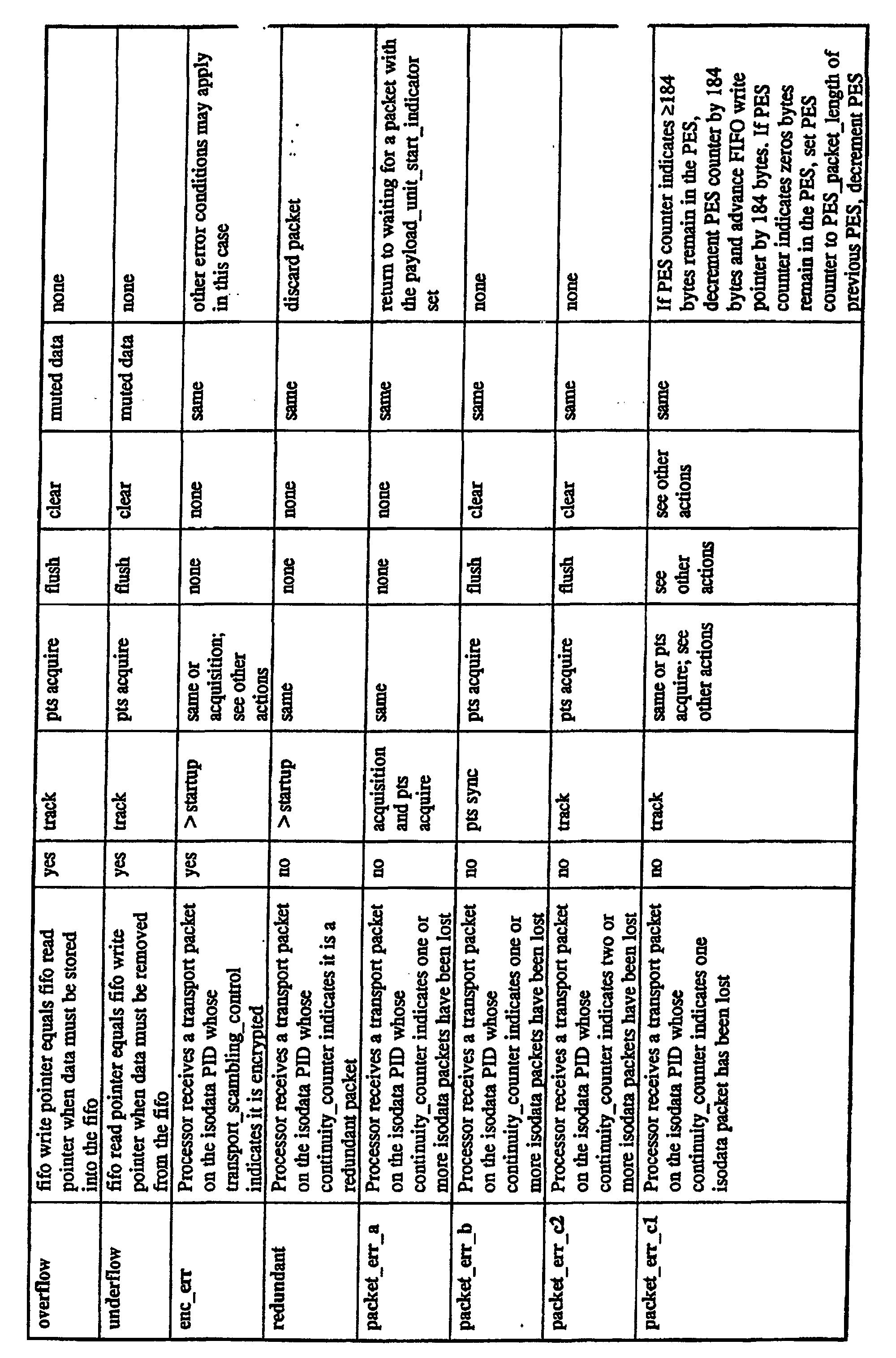

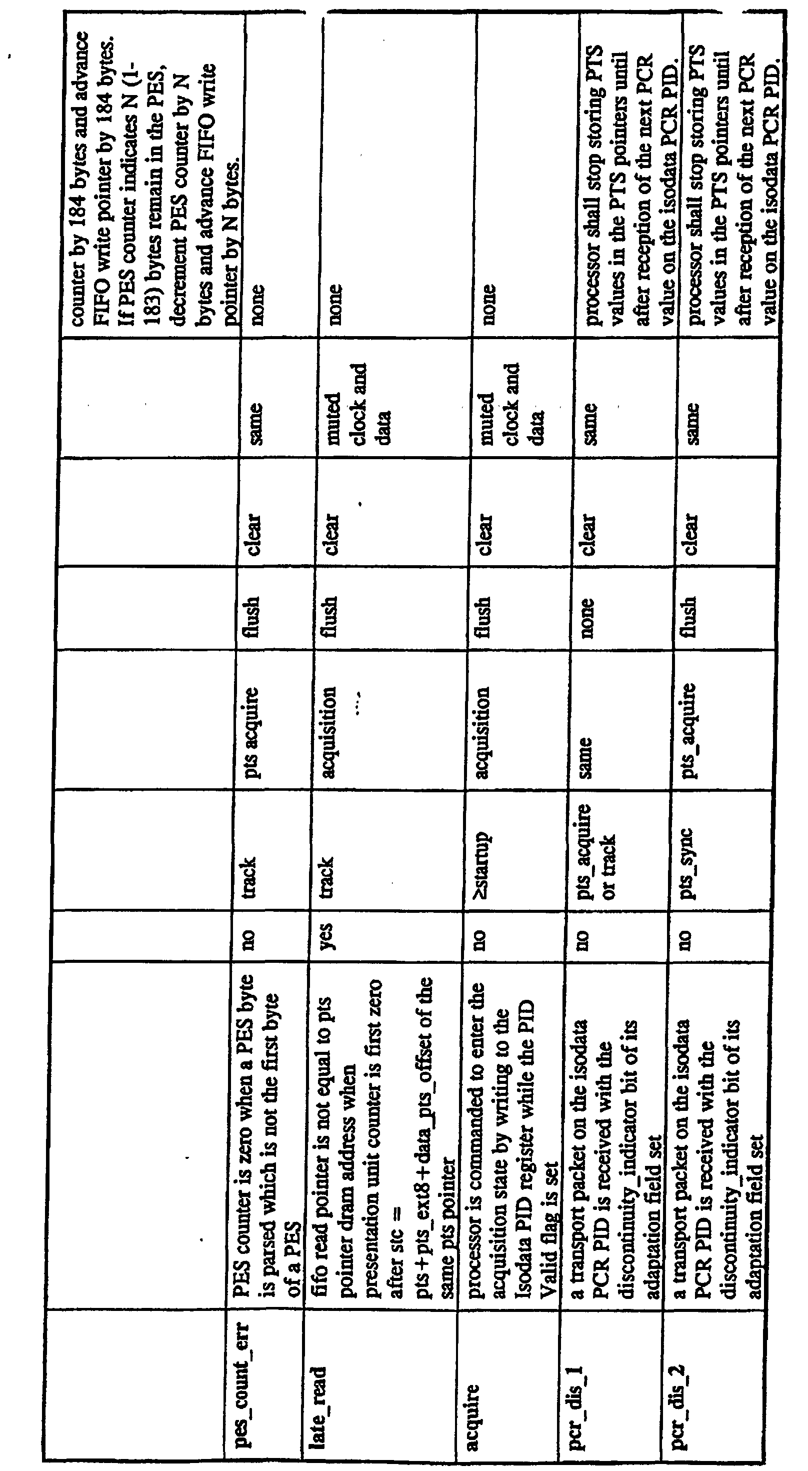

A set of registers is maintained to control and keep track of the status of the isodata process. The set of registers is specified in Table 2.

**Table 2**

| Isodata Registers | | | |
|---|---|---|---|
| **Register Name** | **#. Bits** | **Type** | **Definition** |
| **increment** | 32 | read | value of increment field from most recently received isodata header |
| **PID** | 13 | read/write | PID value to use in filtering transport packets for isodata processing |
| **PID reset flag** | 1 | read/write | processor shall move from the startup state to the acquisition state when this flag is reset, shall enter the startup state when this flag is cleared |
| **PID valid flag** | 1 | read/write | processor shall move to the acquisition state when set |
| **mute** | 1 | read/write | Isodata output mode shall be muted data when set, shall be determined by state when cleared |
| **interrupt status** | 6 | read | setup request |
| | | | pts err |
| | | | overflow |
| | | | underflow |
| | | | late read |
| **sync state** | 3 | read | reset, startup, acquisition, setup wait, pts acquire, pts sync, or track |
| **data**_**pts**_**offset** | 13 | read/write | number of 11.1 µ second ticks to add to PTS to determine proper time to begin output of the associated presentation unit |
| **FIFO DRAM base address** | 11 | read/write | base **word** address in DRAM at which isodata FIFO shall reside |
| **interrupt mask** | 6 | read/write | shall provide individual interrupt mask for each interrupt status bit defined above |
| **proceed** | 1 | read/write | clear processor when setup wait state is entered, isodata processor shall enter the pts acquire state when this is set |

It should now be appreciated that the present invention provides a method and apparatus for detecting and recovering from errors when communicating information data, such as isochronous data, in an MPEG-2 type transport stream. The isochronous data follows a PES header in the payload portion of a packetized elementary stream. The PES payload begins with an isochronous data header which is followed by isochronous data presentation units. Isodata transport packets are monitored to locate isodata presentation time stamps (PTSs), and the presentation of isodata from a buffer is synchronized to a system time clock (STC) using timing information derived from the PTSs. Discontinuity errors between isodata packets are identified and where possible, a write pointer of the buffer is advanced by a suitable number of bits to compensate for the discontinuity.
Synchronization of the presentation with respect to the STC is maintained during the error recovery process. A presentation unit count and PES count are maintained to detect lost data. Output timing is verified using a PTS extension and PTS offset. A pair of PTS pointers is used to verify correct data output timing. Additional error detection and recovery techniques are also disclosed.

Although the invention has been described in connection with a preferred embodiment, it should be appreciated that numerous adaptations and modifications may be made thereto without departing from the scope of the invention as set forth in the claims.

## Claims

1. A method for managing timing errors in isochronous data, abbreviated as "isodata", received in bursts from a packetized data stream (20) carrying isodata presentation units (18) in fixed length isodata transport packets (22a, 22b, .. 22g), each of said transport packets (22a, 22b, .. 22g) including a packet identifier, abbreviated as PID, and at least some of said packets containing a presentation time stamp, abbreviated as PTS, (52) indicative of a time for commencing the fixed rate presentation of isodata presentation units (18) from a buffer (152) into which they are temporarily stored upon receipt, said method comprising the steps of:
monitoring said data stream (20) to detect PIDs identifying said isodata transport packets (22a, 22b,.. 22g);
monitoring the isodata transport packets (22a, 22b, .. 22g) identified by said PIDs to locate isodata PTSs (52);
retrieving a PTS extension(54) from the identified isodata transport packets (22a, 22b,.. 22g) to enable the time resolution for presenting the isodata presentation units (18) to be increased;
synchronizing the presentation of said presentation units (18) from said buffer (152) to a system time clock, abbreviated as STC, (162) using timing information derived by summing at least said PTS (52) and said PTS extension (54), said synchronization step comparing the STC (162) to the timing information; and
providing fill bits as output until it is time to present said presentation units (18) if said comparison determines that said presentation units (18) are too early to be presented due to a timing error.

2. A method in accordance with claim 1 wherein said timing information is derived from the sum of said PTS (52), said PTS extension (54), and a PTS offset value used to provide a time delay.

3. A method in accordance with claim 1 or 2 comprising the further steps of:
comparing said timing information to said STC (162) to determine whether said buffered presentation units (18) are too late to be presented as a timing error or ready to be presented from said buffer (152);
in the event said buffered presentation units (18) are determined to be too late to be presented, flushing said buffer and resynchronizing the presentation of newly received presentation units (18) from said buffer (152); and
in the event said buffered presentation units (18) are determined to be ready to be presented, presenting said buffered presentation units (18) from said buffer (152).

4. A method in accordance with one of claims 1 to 3
wherein:
said fill bits are provided as output until a time designated by the STC (162) equals the time designated by said sum.

5. A method in accordance with one of claims 1 to 4 wherein
each presentation unit (18) comprises an integer number N of bits of isodata, said method comprising the further steps of:
maintaining an N-bit count that is correlated with the presentation of a first presentation unit (18) from said buffer (152); and
continuing to provide fill bits as output after said STC (162) equals the time designated by said sum until said N-bit count Indicates that it is time to commence the presentation of a new presentation unit (18).

6. A decoder for managing timing errors in isochronous data, abbreviated as "isodata", received in bursts from a packetized data stream (20) carrying isodata presentation units (18) in fixed length isodata transport packets (22a, 22b, .. 22g), each of said transport packets (22a, 22b, .. 22g) including a packet identifier, abbreviated as PID, and at least some of said packets containing a presentation time stamp, abbreviated as PTS, (52) indicative of a time for commencing the fixed rate presentation of isodata presentation units (18) from a buffer (152) into which they are temporarily stored upon receipt, said decoder comprising:
means (96) for monitoring said data stream to detect PIDs identifying said isodata transport packets (22a, 22b, .. 22g); means (98, 102) for monitoring the isodata transport packets (22a, 22b, .. 22g) identified by said PIDs to extract isodata PTSs (52);
means (98, 104) for retrieving a PTS extension (54) from the identified isodata transport packets (22a, 22b, .. 22g) to enable the time resolution for presenting the isodata presentation units (18) to be increased; and
means (106) for summing at least said PTS (52) and said PTS extension (54) to provide timing information;
means (110; 158) for synchronizing the presentation of said presentation units (18) from said buffer (152) to a system time clock, abbreviated as STC (162), using said timing information; and means (166) for providing fill bits as output until it is time to present said presentation units (18) if said comparison determines that said presentation units (18) are too early to be presented due to a timing error.

7. A decoder in accordance with claim 6 wherein said adder (106) provides said timing information by summing said PTS (52), said PTS extension (54), and a PTS offset value used to provide a time delay.

8. A decoder in accordance with one of claims 6 or 7 further comprising:
means (158) for comparing said timing information to said STC (162) to determine whether said buffered presentation units (18) are too late to be presented as a timing error or ready to be presented from said buffer (152);
means (152, 154, 158) for flushing said buffer (152) and resynchronizing the presentation of newly received presentation units (18) from said buffer (152) if said comparing step determines that said buffered presentation units (18) are too late to be presented; and
means (158, 164) for presenting said buffered presentation units (18) from said buffer (152) if said comparing step determines that said buffered presentation units (18) are ready to be presented.

9. A decoder in accordance with one of claims 6 to 8, wherein:
said fill bits are provided as output until a time designated by the STC (162) equals a time designated by said timing information.

10. A decoder in accordance with one of claims 6 to 8
wherein each presentation unit (18) comprises an integer number N of bits of isodata, said decoder further comprising:
an N-bit counter (164) that is correlated with the presentation of a first presentation unit (18) from said buffer (152);
wherein said fill bits continue to be provided as output after said STC (162) equals the time designated by said
sum until said N-bit counter (164) indicates that it is time to commence the presentation of a new presentation unit (18).

## Patentansprüche

1. Ein Verfahren zur Verwaltung von Timing-Fehlern bei isochronen Daten, abgekürzt "Isodaten", die in Bursts aus einem paketierten Datenstrom (20) empfangen werden, der in Isodaten-Transportpaketen (22a, 22b, .. 22g) fester Länge Isodaten-Präsentationseinheiten (18) überträgt, wobei jedes der Transportpakete (22a, 22b, .. 22g) eine Paketkennung, abgekürzt PID (packet identifier), umfasst, und wobei wenigstens einige der Pakete einen Präsentations-Zeitstempel, abgekürzt PTS (presentation time stamp) (52), enthalten, der anzeigt, zu welchem Zeitpunkt die Präsentation fester Raten von Isodaten-Präsentationseinheiten (18) von einem Puffer (152), in dem sie nach dem Empfang vorübergehend gespeichert wurden, begonnen werden soll, wobei das Verfahren aus folgenden Schritten besteht:
Überwachen des Datenstroms (20), um die die Isodaten-Transportpakete (22a, 22b, .. 22g) identifizierenden PIDs zu erkennen;
Überwachen der durch die PIDs identifizierten Isodaten-Transportpakete (22a, 22b, .. 22g), um die PTSs der Isodaten (52) zu lokalisieren;
Wiedergewinnen einer PTS-Erweiterung (54) aus den identifizierten Isodaten-Transportpaketen (22a, 22b, .. 22g), um die zeitliche Auflösung für das Präsentieren der Isodaten-Präsentationseinheiten (18) erhöhen zu können;
Synchronisieren der Präsentation der Präsentationseinheiten (18) von dem Puffer (152) mit einer Systemuhr, abgekürzt STC (system time clock) (162), wobei Timing-Informationen verwendet werden, die abgeleitet werden, indem wenigstens der PTS (52) und die PTS-Erweiterung (54) addiert werden, wobei der Synchronisierungsschritt die STC (162) mit den Timinglnformationen vergleicht; und
Bereitstellen von Füllbits als Ausgabe bis es Zeit ist, die Präsentationseinheiten (18) zu präsentieren, wenn der Vergleich bestimmt, dass es aufgrund eines Timing-Fehlers zu früh ist, die Präsentationseinheiten (18) zu präsentieren.

2. Verfahren gemäß Anspruch 1, wobei die Timing-Information von der Summe des PTS (52), der PTS-Erweiterung (54) und einer PTS-Offset-Variablen, die verwendet wird, um eine Zeitverzögerung bereitzustellen, abgeleitet wird.

3. Verfahren gemäß Anspruch 1 oder 2, ferner bestehend aus folgenden Schritten:
Vergleichen der Timing-Informationen mit der STC (162), um zu bestimmen, ob es zu spät ist, die gepufferten Präsentationseinheiten (18) als einen Timing-Fehler zu präsentieren, oder ob sie bereit sind, um von dem Puffer (152) präsentiert zu werden;
Räumen des Puffers und Resynchronisierung der Präsentation der neu empfangenen Präsentationseinheiten (18) von dem Puffer (152) in dem Fall, dass bestimmt wird, dass es zu spät ist, die gepufferten Präsentationseinheiten (18) zu präsentieren; und
Präsentieren der gepufferten Präsentationseinheiten (18) von dem Puffer (152) in dem Fall, dass bestimmt wird, dass die gepufferten Präsentationseinheiten (18) bereit sind, um präsentiert zu werden.

4. Verfahren gemäß einem der Ansprüche 1 bis 3, wobei:
die Füllbits als Ausgabe bereitgestellt werden, bis eine durch die STC (162) festgelegte Zeit der Zeit, die durch die Summe festgelegt wird, entspricht.

5. Verfahren gemäß einem der Ansprüche 1 bis 4, wobei jede Präsentationseinheit (18) aus einer Ganzzahl N von Isodaten-Bits besteht, wobei das Verfahren ferner aus folgenden Schritten besteht:
Aufrechterhalten einer N-Bit-Anzahl, die mit der Präsentation einer ersten Präsentationseinheit (18) von dem Puffer (152) korreliert; und
kontinuierliches Bereitstellen von Füllbits als Ausgabe, nachdem die STC (162) der Zeit, die durch die Summe festgelegt wird, entspricht, bis die N-Bit-Anzahl anzeigt, dass es Zeit ist, die Präsentation einer neuen Präsentationseinheit (18) zu beginnen.

6. Ein Decodierer zur Verwaltung von Timing-Fehlern bei isochronen Daten, abgekürzt "Isodaten", die in Bursts aus einem paketierten Datenstrom (20) empfangen werden, der in Isodaten-Transportpaketen (22a, 22b, .. 22g) fester Länge Isodaten-Präsentationseinheiten (18) überträgt, wobei jedes der Transportpakete (22a, 22b, .. 22g) eine Paketkennung, abgekürzt PID, umfasst, und wobei wenigstens einige der Pakete einen Präsentations-Zeitstempel, abgekürzt PTS (52), enthalten, der anzeigt, zu welchem Zeitpunkt die Präsentation fester Raten von Isodaten-Präsentationseinheiten (18) aus einem Puffer (152), in dem sie nach dem Empfang vorübergehend gespeichert wurden, begonnen werden soll, wobei der Decodierer aus Folgendem besteht:
einem Mittel (96) zum Überwachen des Datenstroms, um die die Isodaten-Transportpakete (22a, 22b, .. 22g) identifizierenden PIDs zu erkennen;
Mitteln (98, 102) zum Überwachen der durch die PIDs identifizierten Isodaten-Transportpakete (22a, 22b, .. 22g), um die PTSs der Isodaten (52) abzufragen;
Mitteln (98, 104) zum Wiedergewinnen einer PTS Erweiterung (54) aus den identifizierten Isodaten-Transportpaketen (22a, 22b, .. 22g), um die zeitliche Auflösung für das Präsentieren der Isodaten-Präsentationseinheiten (18) zu erhöhen; und
einem Mittel (106) zum Addieren von wenigstens dem PTS (52) und der PTS-Erweiterung (54), um Timing-Informationen bereitzustellen;
Mitteln (110; 158) zum Synchronisieren der Präsentation der Präsentationseinheiten (18) von dem Puffer (152) mit einer Systemuhr, abgekürzt STC (162), wobei die Timing-Informationen verwendet werden; und
einem Mittel (166) zum Bereitstellen von Füllbits als Ausgabe bis es Zeit ist, die Präsentationseinheiten (18) zu präsentieren, wenn der Vergleich bestimmt, dass es aufgrund eines Timing-Fehlers zu früh ist, die Präsentationseinheiten (18) zu präsentieren.

7. Decodierer gemäß Anspruch 6, wobei der Addierer (106) die Timing-Informationen bereitstellt, indem er den PTS (52), die PTS-Erweiterung (54) und eine PTS-Offset-Variable, die verwendet wird, um eine Zeitverzögerung bereitzustellen, addiert.

8. Decodierer gemäß einem der Ansprüche 6 oder 7, ferner bestehend aus:
einem Mittel (158) zum Vergleichen der Timing-Informationen mit der STC (162), um zu bestimmen, ob es zu spät ist, die gepufferten Präsentationseinheiten (18) als einen Timing-Fehler zu präsentieren, oder ob sie bereit sind, um von dem Puffer (152) präsentiert zu werden;
Mitteln (152, 154, 158) zum Räumen des Puffers (152) und Resynchronisieren der Präsentation von neu empfangenen Präsentationseinheiten (18) von dem Puffer (152), wenn der vergleichende Schritt bestimmt, dass es zu spät ist, die gepufferten Präsentationseinheiten (18) zu präsentieren; und
Mitteln (158, 164) zum Präsentieren der gepufferten Präsentationseinheiten (18) von dem Puffer (152), wenn der vergleichende Schritt bestimmt, dass die gepufferten Präsentationseinheiten (18) bereit sind, um präsentiert zu werden.

9. Decodierer gemäß einem der Ansprüche 6 bis 8, wobei:
die Füllbits als Ausgabe bereitgestellt werden, bis eine durch die STC (162) festgelegte Zeit der Zeit, die durch die Timing-Informationen festgelegt wurde, entspricht.

10. Decodierer gemäß einem der Ansprüche 6 bis 8, wobei jede Präsentationseinheit (18) aus einer Ganzzahl N von Isodaten-Bits besteht, wobei der Decodierer ferner aus Folgendem besteht:
einem N-Bit-Zähler (164), der mit der Präsentation einer ersten Präsentationseinheit (18) von dem Puffer (152) korreliert;
wobei die Füllbits weiterhin als Ausgabe bereitgestellt werden, nachdem die STC (162) der Zeit, die durch die Summe festgelegt wird, entspricht, bis der N-Bit-Zähler (164) anzeigt, dass es Zeit ist, die Präsentation einer neuen Präsentationseinheit (18) zu beginnen.

## Revendications

1. Un procédé destiné à gérer des erreurs temporelles dans des données isochrones, abrégées en "données iso", reçues en rafales d'un flot de données en paquets (20) qui véhicule des unités de présentation de données iso (18) dans des paquets de transport de données iso de longueur fixe (22a, 22b, .. 22g), chacun desdits paquets de transport (22a, 22b, .. 22g) comportant un identificateur de paquet, abrégé en PID, et certains desdits paquets au moins contenant un marqueur temporel de présentation, abrégé en PTS, (52) indiquant un temps pour commencer la présentation à vitesse fixe d'unités de présentation de données iso (18) à partir d'un tampon (152) dans lequel elles sont stockées momentanément à leur réception, ledit procédé comprenant les étapes consistant :
à surveiller ledit flot de données (20) afin de détecter des PID identifiant lesdits paquets de transport de données iso (22a, 22b, .. 22g) ;
à surveiller les paquets de transport de données iso (22a, 22b, .. 22g) identifiés par lesdits PID afin de localiser les PTS de données iso (52) ;
à récupérer une extension de PTS (54) des paquets de transport de données iso identifiés (22a, 22b, .. 22g) afin de permettre l'augmentation de la résolution temporelle destinée à présenter les unités de présentation de données iso (18) ;
à synchroniser la présentation desdites unités de présentation (18) à partir dudit tampon (152) sur une horloge temporelle système, abrégée en STC, (162) en utilisant des informations temporelles obtenues en faisant la somme au moins dudit PTS (52) et de ladite extension de PTS (54), ladite étape de synchronisation comparant la STC (162) aux informations temporelles ; et
à fournir comme sortie des bits de remplissage jusqu'à ce qu'il soit temps de présenter lesdites unités de présentation (18) si ladite comparaison détermine qu'il est trop tôt pour présenter lesdites unités de présentation (18) en raison d'une erreur temporelle.

2. Un procédé conformément à la revendication 1 dans lequel lesdites informations temporelles sont obtenues à partir de la somme dudit PTS (52), de ladite extension de PTS (54) et d'une valeur offset de PTS servant à fournir une temporisation.

3. Un procédé conformément à la revendication 1 ou à la revendication 2 comprenant les étapes supplémentaires consistant :
à comparer lesdites informations temporelles à ladite STC (162) afin de déterminer s'il est trop tard pour présenter lesdites unités de présentation tamponnées (18) comme une erreur temporelle ou si elles sont prêtes à être présentées à partir dudit tampon (152) ;
dans le cas où il est déterminé qu'il est trop tard pour présenter lesdites unités de présentation tamponnées (18), à vider ledit tampon et à resynchroniser la présentation d'unités de présentation nouvellement reçues (18) dudit tampon (152) ; et
dans le cas où il est déterminé que lesdites unités de présentation tamponnées (18) sont prêtes à être présentées, à présenter lesdites unités de présentation tamponnées (18) à partir dudit tampon (152).

4. Un procédé conformément à l'une des revendications 1 à 3 dans lequel :
lesdits bits de remplissage sont fournis comme sortie jusqu'à ce qu'un temps désigné par la STC (162) égale le temps désigné par ladite somme.

5. Un procédé conformément à l'une des revendications 1 à 4 dans lequel chaque unité de présentation (18) comprend un nombre entier N de bits de données iso, ledit procédé comprenant les étapes supplémentaires consistant:
à maintenir un compte N bits qui soit en corrélation avec la présentation d'une première unité de présentation (18) à partir dudit tampon (152) ; et
à continuer de fournir comme sortie des bits de remplissage après que ladite STC (162) a égalé le temps désigné par ladite somme jusqu'à ce que ledit compte N bits indique qu'il est temps de commencer la présentation d'une nouvelle unité de présentation (18).

6. Un décodeur destiné à gérer des erreurs temporelles dans des données isochrones, abrégées en "données iso", reçues en rafales d'un flot de données en paquets (20) qui véhicule des unités de présentation de données iso (18) dans des paquets de transport de données iso de longueur fixe (22a, 22b, .. 22g), chacun desdits paquets de transport (22a, 22b, .. 22g) comportant un identificateur de paquet, abrégé en PID, et certains desdits paquets au moins contenant un marqueur temporel de présentation, abrégé en PTS, (52) indiquant un temps pour commencer la présentation à vitesse fixe d'unités de présentation de données iso (18) à partir d'un tampon (152) dans lequel elles sont stockées momentanément à leur réception, ledit décodeur comprenant :
un moyen (96) destiné à surveiller ledit flot de données afin de détecter des PID identifiant lesdits paquets de transport de données iso (22a, 22b, .. 22g) ; des moyens (98, 102) destinés à surveiller les paquets de transport de données iso (22a, 22b, .. 22g) identifiés par lesdits PID afin d'extraire les PTS de données iso (52) ;
des moyens (98, 104) destinés à récupérer une extension de PTS (54) des paquets de transport de données iso identifiés (22a, 22b, .. 22g) afin de permettre l'augmentation de la résolution temporelle destinée à présenter les unités de présentation de données iso (18) ; et
un moyen (106) destiné à faire la somme au moins dudit PTS (52) et de ladite extension de PTS (54) afin de fournir des informations temporelles ;
des moyens (110 ; 158) destinés à synchroniser la présentation desdites unités de présentation (18) à partir dudit tampon (152) sur une horloge temporelle système, abrégée en STC (162), en utilisant lesdites informations temporelles ; et un moyen (166) destiné à fournir comme sortie des bits de remplissage jusqu'à ce qu'il soit temps de présenter lesdites unités de présentation (18) si ladite comparaison détermine qu'il est trop tôt pour présenter lesdites unités de présentation (18) en raison d'une erreur temporelle.

7. Un décodeur conformément à la revendication 6 dans lequel ledit additionneur (106) fournit lesdites informations temporelles en faisant la somme dudit PTS (52), de ladite extension de PTS (54) et d'une valeur offset de PTS servant à fournir une temporisation.

8. Un décodeur conformément à l'une des revendications 6 et 7 comprenant de plus :
un moyen (158) destiné à comparer lesdites informations temporelles à ladite STC (162) afin de déterminer s'il est trop tard pour présenter lesdites unités de présentation tamponnées (18) comme une erreur temporelle ou si elles sont prêtes à être présentées à partir dudit tampon (152) ;
des moyens (152, 154, 158) destinés à vider ledit tampon (152) et à resynchroniser la présentation d'unités de présentation nouvellement reçues (18) dudit tampon (152) si ladite étape de comparaison détermine qu'il est trop tard pour présenter lesdites unités de présentation tamponnées (18) ; et
des moyens (158, 164) destinés à présenter lesdites unités de présentation tamponnées (18) à partir dudit tampon (152) si ladite étape de comparaison détermine que lesdites unités de présentation tamponnées (18) sont prêtes à être présentées.

9. Un décodeur conformément à l'une des revendications 6 à 8, dans lequel :
lesdits bits de remplissage sont fournis comme sortie jusqu'à ce qu'un temps désigné par la STC (162) égale un temps désigné par lesdites informations temporelles.

10. Un décodeur conformément à l'une des revendications 6 à 8 dans lequel chaque unité de présentation (18) comprend un nombre entier N de bits de données iso, ledit décodeur comprenant de plus :
un compteur N bits (164) qui est en corrélation avec la présentation d'une première unité de présentation (18) à partir dudit tampon (152) ;
dans lequel lesdits bits de remplissage continuent à être fournis comme sortie après que ladite STC (162) a égalé le temps désigné par ladite somme jusqu'à ce que ledit compteur N bits (164) indique qu'il est temps de commencer la présentation d'une nouvelle unité de présentation (18).
